# EUROPÄISCHE PATENTSCHRIFT

(11) **EP 2 626 846 B1**
(45) Veröffentlichungstag und Bekanntmachung des Hinweises auf die Patenterteilung: **14.05.2014**
(21) Anmeldenummer: 12154400.1
(22) Anmeldetag: 08.02.2012
(51) Int. Cl.: G01C 21/34, G08G 1/0967, G01C 21/26

(54) **System und Verfahren zum Warnen eines Fahrzeugführers vor verkehrstechnischen Besonderheiten**
System and method for warning a driver of a vehicle about traffic situations
Système et procédé d'alerte d'un conducteur de véhicule contre des cas particuliers de la technologie de trafic

(43) Veröffentlichungstag der Anmeldung: 14.08.2013
(73) Patentinhaber: Skobbler GmbH, 10117 Berlin (DE)
(72) Erfinder: Kandal, Philipp, 88069 Tettnang (DE)
(74) Vertreter: Raffay & Fleck

(56) Entgegenhaltungen:
- EP-A1- 1 640 936
- DE-A1- 10 233 376
- DE-A1-102009 031 480
- US-A1- 2005 162 284

## Beschreibung

Die vorliegende Erfindung betrifft ein System sowie ein Verfahren zum Warnen eines Fahrzeugführers vor verkehrstechnischen Besonderheiten.

Verkehrstechnische Besonderheiten im Sinne dieser Erfindung sind solche Ereignisse, Vorkommnisse oder besondere Gegebenheiten entlang von Verkehrswegen, die einen besonderen Einfluss auf den Verkehrsfluss bzw. das erforderliche Verhalten eines Fahrzeugführers haben. Hierunter fallen insbesondere Staus und Verkehrsstockungen, Baustellen, Unfallstellen, Gefahren aufgrund von Fußgängern oder Tieren im Bereich der Fahrbahnen, Sperrungen aber auch Punkte, an denen Geschwindigkeitskontrollen mit beispielsweise stationären oder aber mobilen Radarfallen oder anderen Geschwindigkeitsmesssystemen durchgeführt werden. Derartige verkehrstechnische Besonderheiten erfordern von dem Führer eines Fahrzeuges eine besonders aufmerksame Fahrweise, bedingen eine besonders penible Einhaltung der zulässigen Höchstgeschwindigkeit entlang der Fahrstrecke oder erfordern beispielsweise in Gestalt von Staus die Erwägung einer Ausweichroute, um einen solche Stau zu umfahren.

Heute ist es üblich, dass Fahrzeugführer mit Hilfe von Navigationsgeräten Routen abfahren, die zuvor von den Navigationsgeräten ausgehend von einem Startpunkt bis zu einem Zielpunkt berechnet sind und entlang derer der Fahrzeugführer mit Hilfe des Navigationsgerätes mit Sprachansagen und/oder optischen Anzeigen geführt wird. Dabei ist es bekannt, dass entsprechende Navigationsgeräte, die die Positionsbestimmung des Fahrzeuges mit Hilfe von satellitengestützten Navigationssignalen, insbesondere GPS-Signalen, ermitteln und kontinuierlich nachverfolgen, zudem auch über beispielsweise Verkehrsfunk oder von Navigationsoder sonstigen Anbietern übermittelte Signale Informationen über Art und Position entsprechender verkehrstechnischer Besonderheiten empfangen. Ein Fahrzeugführer, der mit Hilfe eines Navigationsgerätes eine bestimmte Route abfährt, wird nach bestimmten Vorgaben dann entsprechend vor auf seiner Route liegenden verkehrstechnischen Besonderheiten gewarnt.

Häufig jedoch wollen Fahrzeugführer die Routenführung eines Navigationsgerätes nicht nutzen, z.B. wenn sie ihnen bekannte Strecken fahren, entlang derer sie ohne eine aktive Navigation sich bewegen können, da sie die zu wählende Route bereits kennen oder aber mit anderen Methoden (beispielsweise anhand eines Kartenstudiums) ermitteln und ungeführt nachfahren können. Insbesondere fühlen sich Fahrzeugführer dann, wenn eine Navigation mit Hilfe eines Navigationsgerätes bzw. -systems nicht erforderlich ist, durch die wiederholten Ansagen oder Anzeigen eines solchen Gerätes gestört, wenn sie beispielsweise bei der Autofahrt Musik hören, einen informativen Radiosender verfolgen oder auch nur ein Gespräch mit einem Beifahrer führen wollen.

Unabhängig davon, ob dieses Gerät für eine aktuelle Navigation genutzt wird, besitzen viele Fahrzeugführer navigationstaugliche Geräte, sei es eigene Navigationsgeräte oder sei es Multifunktionsgeräte wie etwa Smartphones, die heutzutage mit beispielsweise GPS-Empfängern ausgerüstet und mittels einer Navigationssoftware navigationstauglich gemacht sind. Diese Navigationsgeräte werden häufig auch bei solchen Fahrten mitgeführt, bei denen eine aktive Navigation nicht erfolgt.

Da eine Warnung vor relevanten verkehrstechnischen Besonderheiten, die auf dem Weg, die ein Fahrzeugführer nimmt, liegen können, auch dann wünschenswert ist, wenn eine aktive Navigation mit Routenführung nicht vorgenommen wird, gibt es Überlegungen, entsprechende navigationsfähige Geräte für derartige Warnzwecke einzusetzen. Eine Möglichkeit, dies zu unternehmen ist in der WO 01 /55744 A2 beschrieben. Dort ist anhand einer Anwendung zum Warnen vor Geschwindigkeitsmessgeräten (beispielsweise Radarfallen) beschrieben, bei welchem unter Berücksichtigung einer Entfernung des Fahrzeuges zu einem Aufstellort eines Geschwindigkeitsmessgerätes sowie unter Berücksichtigung der Mess- und Fahrrichtungen eine Warnung an einen Fahrzeugführer ausgegeben wird. Stimmen Mess- und Fahrtrichtung nicht überein, befindet sich das Fahrzeug jedoch innerhalb einer enger bestimmten Entfernung von dem Aufstellort des Geschwindigkeitsmessgerätes, so erfolgt ebenfalls eine Warnung.

Es sind weitere Systeme bekannt, bei denen Warnungen vor verkehrstechnischen Besonderheiten wie etwa Geschwindigkeitsmessgeräten abhängig von einer Luftlinienentfernung der jeweiligen verkehrstechnischen Besonderheit von der Fahrzeugposition ausgegeben werden, wenn diese Luftlinienentfernung einen vorbestimmten Wert unterschreitet. Ebenfalls gibt es Lösungen, bei denen eine Überprüfung stattfindet, ob die verkehrstechnische Besonderheit auf einer Straße liegt, entlang der sich das Fahrzeug gerade bewegt.

Sämtliche der vorgenannten Systeme bzw. Verfahren führen jedoch zu einer größeren Anzahl von Warnungen vor verkehrstechnischen Besonderheiten, die auf Streckenabschnitten liegen, die von dem Fahrzeugführer überhaupt nicht passiert werden. So kann beispielsweise bei einer Warnung ausschließlich vor solchen verkehrstechnischen Besonderheiten, wie etwa Geschwindigkeitsmessgeräten, die innerhalb eines bestimmten Umkreises in einer Liftlinienentfernung um das Fahrzeug herum angeordnet sind, für ein Fahrzeug, welches sich auf einer Autobahn bewegt, eine Warnung vor einem Geschwindigkeitsmessgerät abgegeben werden, welches an einer nahe an der Autobahn vorbeiführenden Landstrasse aufgebaut ist, ohne dass der Fahrzeugführer diese Landstrasse jedoch passiert oder zu passieren beabsichtigt. Problematisch bei der Ausgabe einer Vielzahl von Warnungen, die den Fahrzeugführer entlang seiner Fahrtstrecke nicht betreffen, ist, dass der Fahrzeugführer aufgrund der Anzahl nicht relevanter Warnungen hinsichtlich seiner Aufmerksamkeit, die er den Warnungen schenkt, abbaut, der einzelnen Warnung also weniger Gewicht beimisst bzw. diese nicht mehr beachtet. So entgehen seiner Aufmerksamkeit bisweilen auch für ihn tatsächlich relevante Warnungen. Um dies zu verhindern ist es Ziel der Erfindung, die Anzahl der nicht relevanten Warnungen vor verkehrstechnischen Besonderheiten bei einer nicht navigationsgeführten Fahrt zu reduzieren.

Dokument DE 10 2009 0031 480, das den Obergriff des Anspruchs 1 bestimmt, betrifft ein System zum Betrieb eines Navigationssystems in einem nicht navigationsführenden Zustand, in dem ausgehend von der aktuellen Fahrzeugposition und Fahrtrichtung zumindest eine wahrscheinliche Fahrtroute prognostiziert wird und die Fahrtroute auf das Auftreten von Verkehrsstörungen, die durch ein Verkehrsstörungsmeldesystem übermittelt werden, überwacht wird.

Erreicht wird dieses Ziel mit einem System zum Warnen eines Fahrzeugführers vor verkehrstechnischen Besonderheiten mit den Merkmalen des Anspruches 1, eine Lösung dieser Aufgabe besteht auch in einem Verfahren mit den Merkmalen des Anspruches 4. Mögliche besondere und vorteilhafte Weiterbildungen des Systems bzw. des Verfahrens sind in den abhängigen Ansprüchen 2 und 3 bzw. 5 und 6 angegeben.

Das erfindungsgemäße System zum Warnen eines Fahrzeugführers vor verkehrstechnischen Besonderheiten umfasst eine Positionsbestimmungseinrichtung, eine Speichereinrichtung, eine Routenberechnungseinrichtung, eine Empfangseinrichtung, eine Relevanzbestimmungseinrichtung sowie eine Warneinrichtung.

Mit der Positionsbestimmungseinrichtung wird aus empfangenen Signalen, beispielsweise GPS-Signalen, die aktuelle Fahrzeugposition bestimmt. In der Speichereinrichtung sind Straßenverläufe repräsentierende Kartendaten gespeichert. Die Routenberechnungseinrichtung kann unter Rückgriff auf die Kartendaten Routen entlang der durch die Kartendaten repräsentierten Straßenverläufe berechnen. Die Empfangseinrichtung ist zum Empfangen von Informationen hinsichtlich der Art und Position einer verkehrstechnischen Besonderheit eingerichtet. Derartige Informationen werden beispielsweise von Radiosendern als verschlüsselte Verkehrsfunkmeldungen ausgestrahlt, es gibt aber auch andere Übertragungswege, mit denen beispielsweise Anbieter von Navigationssystemen eigene Datensätze an entsprechend eingerichtete Empfangseinrichtungen ihrer Geräte übermitteln, z.B. über das Internet, an welches entsprechend eingerichtete Navigationsgeräte drahtlos angeschlossen sind.

Die Besonderheit des erfindungsgemäßen Systems liegt nun darin, dass in der Relevanzbestimmungseinrichtung, welche die Relevanz der Informationen überprüft, dies anhand bestimmter Kriterien geschieht, nämlich:
i) anhand der Entfernung der Position der verkehrstechnischen Besonderheit von der Fahrzeugposition nach Luftlinie,
ii) anhand der Entfernung der Position der verkehrstechnischen Besonderheit von der Fahrzeugposition entlang einer möglichen von der Routenberechnungseinrichtung berechneten Route,
iii) anhand der Anzahl der entlang der von der Routenberechnungseinheit berechneten, möglichen Route erforderlichen Abbiegemanöver.

Nur dann, wenn zumindest die Luftlinienentfernung unterhalb eines ersten vorbestimmten Entfernungswertes liegt, weiterhin die Entfernung der Position der verkehrstechnischen Besonderheit von der Fahrzeugposition entlang der berechneten Route unterhalb eines zweiten vorbestimmten Entfernungswertes liegt und weiterhin die Anzahl der erforderlichen Abbiegemanöver unterhalb einer vorbestimmten Maximalanzahl liegt, wird durch das System mittels der Warneinrichtung eine Warnung an den Fahrzeugführer ausgegeben.

Bei diesem Vorgehen werden sukzessive aus einer Anzahl möglicher für den Fahrzeugführer relevanter verkehrstechnischer Besonderheiten solche ausgesondert, für die die Wahrscheinlichkeit gering ist, dass sie auf dem Weg, den der Fahrzeugführer einzuschlagen beabsichtigt, liegen. So wird zunächst vermieden, dass besonders frühzeitig vor solchen verkehrstechnischen Besonderheiten gewarnt wird, die zwar innerhalb einer kritischen Luftlinienentfernung liegen, deren Routenentfernung jedoch besonders groß ist. Zudem werden solche verkehrstechnischen Besonderheiten nicht berücksichtigt, die zwar innerhalb einer bestimmten Routenentfernung liegen, die anzufahren jedoch eine größere Anzahl von Abbiegemanöver erfordert. Dass der Fahrzeugführer entlang der von ihm gewählten, nicht durch ein Navigationsgerät geführten Strecke gerade diese Anzahl an konkret erforderlichen Abbiegemanövern vornimmt, wird als unwahrscheinlich gewertet, so dass auch vor solchen verkehrstechnischen Besonderheiten nicht gewarnt wird.

Die konkrete Festlegung des ersten vorbestimmten Entfernungswertes, des zweiten vorbestimmten Entfernungswertes und der Maximalanzahl der erforderlichen Abbiegemanöver erfolgt in Abhängigkeit von der Art der verkehrstechnischen Besonderheit so, dass eine Warnung noch rechtzeitig möglich ist, sollte sich das Fahrzeug der verkehrstechnischen Besonderheit weiterhin nähern bzw. auf diese zusteuern, und dass ausreichend Zeit zum Reagieren auf die jeweilige verkehrstechnische Besonderheit verbleibt. So ist eine Warnung vor Geschwindigkeitsmessanlagen hinsichtlich der Entfernung zu derselben nicht so frühzeitig erforderlich wie etwa eine Warnung vor einem Stau oder einer Strecksperrung, welchen bzw. welche der Fahrzeugführer womöglich zu umfahren sucht. Entsprechend wird, wenn die verkehrstechnische Besonderheit ein solcher Stau oder eine Streckensperrung ist, der erste vorbestimmte Entfernungswert und auch der zweite vorbestimmte Entfernungswert höher bzw. größer gewählt werden als beispielsweise für den Fall einer Geschwindigkeitsmesseinrichtung als verkehrstechnische Besonderheit. Die vorbestimmte Maximalanzahl der Abbiegemanöver kann entsprechend der Art der verkehrstechnischen Besonderheit gewählt werden. Auch hier kann eine größere Anzahl von möglichen Abbiegemanövern als Maximalanzahl festgelegt werden, falls vor Staus gewarnt werden soll oder vor Streckensperrungen als dies für die Warnung vor Geschwindigkeitsmessgeräten der Fall ist.

Ein Beispiel von Entfernungswerten für bestimmte Entfernungen kann z.B. für den Fall einer Warnung vor Geschwindigkeitsmessanlagen bei 2 km für den ersten vorbestimmten Entfernungswert und 1 km für den zweiten Entfernungswert sowie die Maximalanzahl 2 für die Abbiegemanöver sein. Im Falle einer Warnung vor einem Stau oder einer Streckensperrung als verkehrstechnische Besonderheit können hingegen der erste vorbestimmte Entfernungswert auf 50 km, der zweite vorbestimmte Entfernungswert auf 30 km und die Maximalanzahl der erforderlichen Abbiegemanöver auf 5 bis 10 festgelegt werden. Andere Zahlen für die Festlegungen sind ebenfalls denkbar, für die Warnung vor Geschwindigkeitsmessgeräten haben sich für den ersten vorbestimmten Entfernungswert Werte im Bereich zwischen 1 bis 5 km, für den zweiten vorbestimmten Entfernungswert Werte zwischen ebenfalls 1 und 5 km für die Maximalanzahl der Abbiegemanöver Werte zwischen 1 und 5 als geeignet erwiesen. Soll hingegen vor einem Stau oder einer Streckensperrung gewarnt werden, so haben sich für den ersten vorbestimmten Entfernungswert Werte zwischen 20 und 150 km, für den zweiten vorbestimmten Entfernungswert Werte zwischen 10 und 100 km und für die Maximalanzahl der erforderlichen Abbiegemanöver Werte zwischen 2 und 10 als geeignet erwiesen.

Das erfindungsgemäße System kann realisiert sein beispielsweise in einem Navigationsgerät, welches ausschließlich für die Ortung und mögliche Routennavigation vorgesehen ist. Gleichermaßen kann es aber auch realisiert sein durch ein mit entsprechender Software ausgestattetes Multifunktionsgerät wie etwa ein Smartphone, ein Tablet-PC oder dgl.

Das erfindungsgemäße System kann mit seiner Relevanzbestimmungseinrichtung zudem so eingerichtet sein, dass die Art der zur Verfolgung der möglichen von der Routenberechnungseinrichtung berechneten Route zwischen der Fahrzeugposition und der Position der verkehrstechnischen Besonderheit erforderlichen Abbiegemanöver mit dieser bestimmt wird und hinsichtlich der Relevanz bewertet wird, wobei die Warneinrichtung nur dann eine Warnung an den Fahrzeugführer ausgibt, wenn Abbiegemanöver einer vorbestimmten Art nicht für die Verfolgung der Route erforderlich sind. Derartige Abbiegemanöver können beispielsweise Wendemanöver zum Wechseln der Fahrtrichtung (U-Turns) sein, aber auch schnell hintereinander ausgeführte Abbiegemanöver in die gleiche Richtung, beispielsweise zweimal oder dreimal hintereinander vorgenommene Linksabbiegungen. Denn die Wahrscheinlichkeit, dass ein Fahrzeugführer z.B. entlang einer Route ein Wendemanöver vornimmt und dann in Richtung einer verkehrstechnischen Besonderheit fährt, ist eine geringe.

Das System kann weiterhin mit Vorteil in seiner Empfangseinrichtung so eingerichtet sein, dass auch Informationen hinsichtlich einer Fahrtrichtung empfangen werden, für die die verkehrstechnische Besonderheit vorliegt. Beispielsweise im Falle eines Staus oder einer Sperrung kann dieser Stau oder die Sperrung nur für eine Fahrtrichtung entlang eines Straßenabschnittes relevant sein, wohingegen die Straße in der anderen Richtung frei passierbar ist. Auch für Geschwindigkeitsmessgeräte ist häufig nur eine einzige Messrichtung möglich, z.B. bei stationär errichteten Radarfallen, die einen Straßenabschnitt stets in einer Richtung überwachen, also nur Fahrzeuge mit einer bestimmten Fahrtrichtung kontrollieren.

Das System ist dann hinsichtlich seiner Relevanzbestimmungseinrichtung so eingerichtet, dass die Fahrtrichtung, die das Fahrzeug entlang der berechneten Route verfolgen muss, mit der Fahrtrichtung, für die die verkehrstechnische Besonderheit vorliegt, verglichen wird und die Warneinrichtung nur dann zur Ausgabe eines Warnsignals einen Fahrzeugführer angesteuert wird, wenn die genannten Fahrtrichtungen übereinstimmen.

Sofern eine Warnung vor einer Geschwindigkeitsmesseinrichtung erfolgt, kann diese mit Vorteil zugleich gekoppelt sein mit der Anzeige einer Maximal zulässigen Geschwindigkeit, die für den von der Geschwindigkeitsmesseinrichtung überwachten Straßenabschnitt den in der Speichereinrichtung gespeicherten Kartendaten entnommen ist. Auf diese Weise wird der Fahrzeugführer nicht nur vor dem Vorhandensein einer Geschwindigkeitsmessanlage gewarnt, sondern zugleich auch auf eine maximal zulässige Höchstgeschwindigkeit aufmerksam gemacht. Ist das System auch zur Wahrnehmung einer aktuellen Fahrgeschwindigkeit des Fahrzeuges eingerichtet (beispielsweise bei einem fest installierten Gerät mit den Fahrzeugtachometer verbunden, bei einem von dem Fahrzeug getrennten Gerät mit einer entsprechenden Einrichtung zur Bestimmung einer Bewegungsgeschwindigkeit anhand der zeitlichen Veränderung der mittels der empfangenen Signale ermittelten Position eingerichtet), so kann zusätzlich eine Warnung, beispielsweise ein Signalton, abgegeben werden, wenn der Fahrzeugführer mit seinem Fahrzeug die im Straßenabschnitt, in dem die Geschwindigkeitsmesseinrichtung aufgestellt ist, gestattete Höchstgeschwindigkeit überschreitet.

Ein erfindungsgemäßes Verfahren arbeitet mit folgenden Schritten:

Die Position des Fahrzeuges wird anhand von empfangenen Signalen bestimmt. Es werden die Position einer verkehrstechnischen Besonderheit repräsentierende Positionsdaten empfangen wie auch Daten, die die Art der verkehrstechnischen Besonderheit repräsentieren. Es wird zunächst eine Luftlinienentfernung zwischen der Position des Fahrzeuges und der Position der verkehrstechnischen Besonderheit bestimmt. Liegt diese Luftlinienentfernung unterhalb eines ersten vorgegebenen Maximalwertes, so wird eine Route berechnet, die die Fahrzeugposition mit der Position der verkehrstechnischen Besonderheit entlang eines Straßenverlaufes verbindet. Entlang dieser Route wird eine Routenentfernung zwischen der Position des Fahrzeuges und der Position der verkehrstechnischen Besonderheit bestimmt. Wenn diese Route unterhalb eines zweiten vorgegebenen Maximalwertes liegt, wird sodann noch die Anzahl der entlang dieser Route vorzunehmenden Abbiegemanöver bestimmt. Schließlich wird, wenn auch diese Anzahl unterhalb eines dritten vorgegebenen Maximalwertes liegt, eine Warnung an den Fahrzeugführer ausgegeben. In dem Verfahren entsprechen der erste und der zweite vorgegebene Maximalwert dem hinsichtlich des Systems beschriebenen ersten und zweiten vorbestimmten Entfernungswert und können die oben angegebenen Werte annehmen im Hinblick auf die jeweils genannten verkehrstechnischen Besonderheiten. Der dritte vorgegebene Maximalwert entspricht der Maximalanzahl im Hinblick auf das System und kann ebenfalls die dort genannten Werte im Hinblick auf die jeweiligen verkehrstechnischen Besonderheiten annehmen.

Das Verfahren kann weiter verfeinert werden dadurch, dass in dem Schritt, in dem die Anzahl der für die Verfolgung der Route erforderlichen Abbiegemanöver bestimmt wird, nicht nur diese Anzahl, sondern auch die jeweilige Art eines solchen Abbiegemanövers bestimmt wird. Unter der Art ist dabei wie bereits oben geschildert zu verstehen, eine Unterscheidung nach beispielsweise Fahrtrichtungsumkehr (U-Turn), bzw. einer schnellen Abfolge von Abbiegemanövern hintereinander, insbesondere solche gleichen Richtungssinnes. Nur dann, wenn bestimmte vorgegebene Arten nicht unter den erforderlichen Abbiegemanövern liegen, wird nach dieser Ausgestaltung des Verfahrens eine Warnung an den Fahrzeugführer ausgegeben.

Schließlich kann auch bei dem Verfahren eine Berücksichtigung der Fahrtrichtung, in der die verkehrstechnische Besonderheit vorliegt, erfolgen, indem entsprechende Daten empfangen werden und diese Fahrtrichtung bei der Bestimmung der Routenentfernung und/oder der Bestimmung der Anzahl der Abbiegemanöver zusätzlich berücksichtigt wird. Stimmen die Fahrtrichtungen nicht überein bzw. ist aufgrund der unterschiedlichen Fahrtrichtungen eine andere Anzahl und sind andere Arten von Abbiegemanövern erforderlich, so kann eine Warnung ausbleiben.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine schematische Darstellung eines Navigationsgerätes im Zusammenspiel mit Positionssignale gebenden Satelliten, z.B. des GPS-Systems;
- Fig. 2: schematisch den Verfahrensablauf in einem Ausführungsbeispiel der Erfindung; und
- Fig. 3: schematisch eine Übersicht möglicher Positionen von Verkehrsmesseinrichtungen als Beispiele verkehrstechnischer Besonderheiten in Bezug auf eine Fahrzeugposition P.

In den Figuren sind schematische Darstellungen gegeben, anhand derer nachfolgend ein Ausführungsbeispiel bzw. mögliche Varianten dieses Ausführungsbeispieles für ein erfindungsgemäßes System und Verfahren erläutert werden.

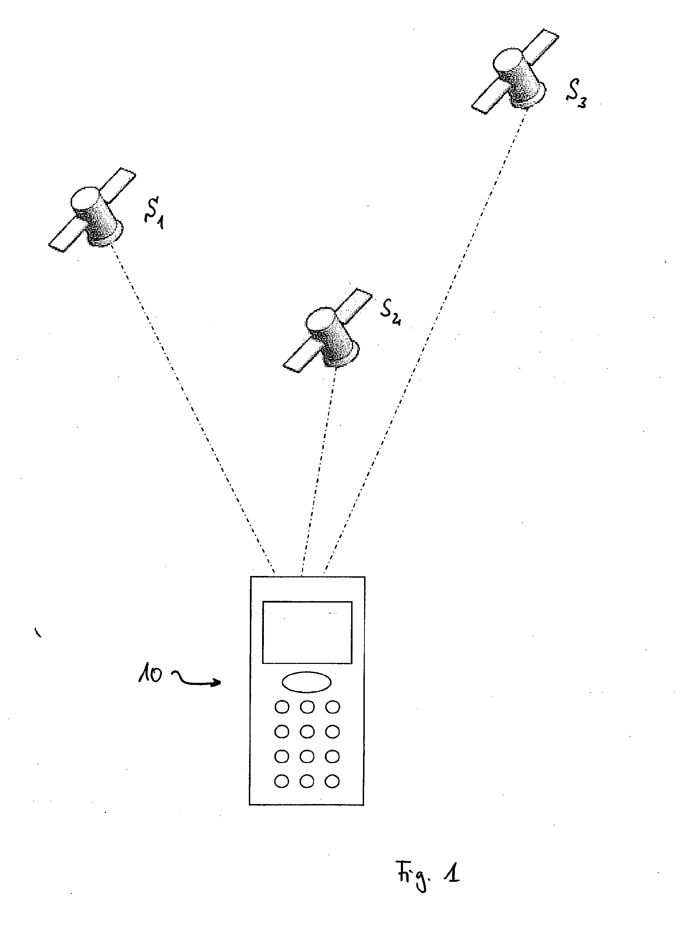

In Fig. 1 ist ein Navigationsgerät allgemein mit 10 bezeichnet. Das Navigationsgerät 10 hier ist als ein Mobilfunkgerät dargestellt, welches einen GPS-Empfänger aufweist und darüber Positionsdaten ermitteln kann. Zudem ist auf diesem Mobilfunkgerät eine Navigationssoftware gespeichert mit Kartendaten für die Straßenverläufe eines vorgegebenen Gebietes repräsentierenden Daten sowie einem Routenberechnungsalgorithmus zum Berechnen von Routen von einem ersten Positionspunkt zu einem zweiten Positionspunkt entlang der durch die Kartendaten repräsentierten Straßenverläufe. Dargestellt ist in Fig. 1, dass das als Mobilfunkgerät ausgebildete Navigationsgerät 10 über entsprechende Funksignalverbindungen mit Satelliten S₁, S₂, S₃ des GPS-Systems verbunden ist. Über die von diesen Satelliten S₁ bis S₃ empfangenen Signale führt das Navigationsgerät 10 die Positionsbestimmung durch.

Das Navigationsgerät 10 kann für eine aktive Routenführung genutzt werden, indem ein anzunavigierender Zielort eingegeben wird. Die Navigation erfolgt dann durch Sprachausgabe und Ausgabe entsprechender Navigationssymbole auf einer Anzeige.

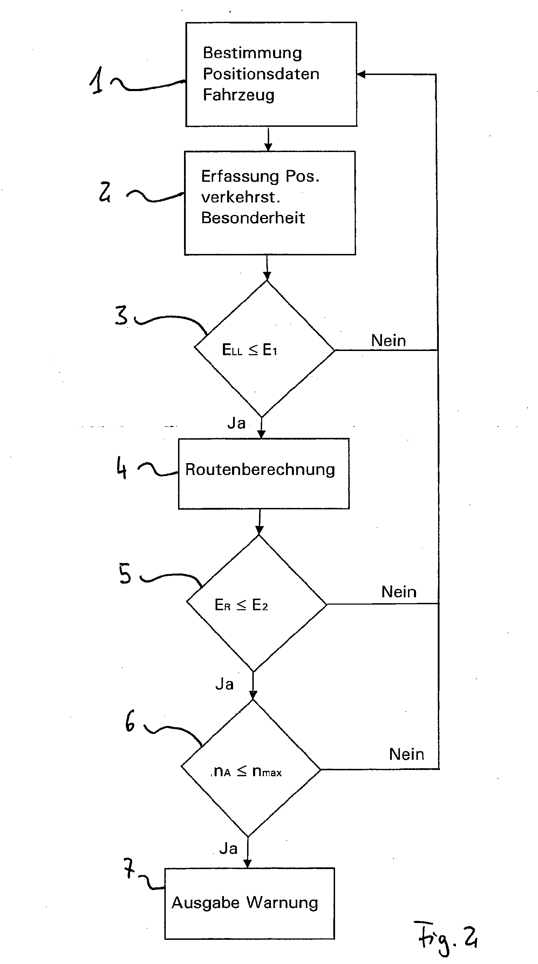

Im Rahmen der Erfindung kann das Navigationsgerät 10 aber auch vor verkehrstechnischen Besonderheiten warnen, die in einem relevanten Einzugsbereich des Fahrzeuges ausgehend von seiner aktuellen Position befindlich sind, wenn eine aktive Routenführung nicht stattfindet. Hierzu läuft in dem Navigationsgerät 10 ein anhand des Ablaufdiagramms gemäß Fig. 2 veranschaulichtes Verfahren ab. Wird eine solche Warnfunktion aktiviert, so nimmt das Navigationsgerät 10 bei Schritt 1 zunächst eine Bestimmung der Positionsdaten das Fahrzeuges vor, indem es über das GPS-System die eigene Position ermittelt und diese der Position des Fahrzeuges gleichsetzt. Dadurch, dass diese Positionsbestimmung kontinuierlich oder jedenfalls innerhalb kurzer Zeitabstände abschnittsweise erfolgt, kann das Navigationsgerät 10 dabei auch eine Veränderung der Positionsdaten feststellen, hieraus jedenfalls eine Bewegungs- bzw. Fahrtrichtung des Fahrzeuges ableiten, ggf. auch über die zeitliche Veränderung der Position eine Geschwindigkeit, mit der sich das Fahrzeug auf der Fahrtstrecke bewegt.

Im nächsten Schritt (der auch zeitgleich mit Schritt 1 ablaufen kann), der hier mit 2 bezeichnet ist, erfasst das Navigationsgerät 10 Positionen verkehrstechnischer Besonderheiten. Diese Erfassung erfolgt insbesondere durch Empfang von drahtlos übertragenen, diese Positionen von verkehrstechnischen Besonderheiten repräsentierenden Signalen, wie sie beispielsweise über Verkehrsfunksender oder aber andere Anbieter verbreitet werden. In Schritt 3, wenn Meldungen zu verkehrstechnischen Besonderheiten wie etwa Staus, Streckensperrungen, Gefahrenstellen, Baustellen, Unfallstellen oder Geschwindigkeitsmessgeräten vorliegen und erfasst sind, wird zunächst überprüft, ob eine in Luftlinie berechnete Entfernung (Luftlinien-Entfernung) E_{LL} kleiner als ein erster vorgegebener Entfernungswert E₁ oder gleich diesem ist. Ist dies nicht der Fall, schreitet das Verfahren zurück zu Schritt 1 und durchläuft die Routine erneut. Wird eine dem obigen Kriterium entsprechende Luftlinien-Entfernung E_{LL} festgestellt, so erfolgt als nächstes in dem Navigationsgerät 10 eine Routenberechnung einer möglichen Route zwischen der Fahrzeugposition und der Position der erfassten verkehrstechnischen Besonderheit. Dies findet in Schritt 4 statt. Im Anschluss wird in einem Schritt 5 eine erneute Abfrage durchlaufen, wobei geprüft wird, ob eine Routen-Entfernung ER, d.h. eine Entfernung von der Fahrzeugposition zu der Position der verkehrstechnischen Besonderheit entlang der errechneten Route, kleiner als ein zweiter vorgegebener Entfernungswert E₂ oder gleich diesem ist. Ist dies nicht der Fall, so springt das Verfahren zurück zu Schritt 1 und durchläuft die Routine erneut. Wird hier eine Unterschreitung des zweiten Entfernungswertes E₂ oder eine diesem gleiche Routen-Entfernung ER festgestellt, so erfolgt in einem nächsten Schritt 6 eine weitere Abfrage. Hier wird festgestellt, ob die Anzahl der auf dem Weg entlang der berechneten Route erforderlichen Abbiegemanöver, welche Anzahl hier mit n_{A} bezeichnet ist, geringer ist als eine vorgegebene Maximalanzahl nₘₐₓ oder diesem gleicht. Ist dies nicht der Fall, geht der Verfahrensablauf wieder zurück zu Schritt 1 und durchläuft die Routine erneut. Ist dies der Fall, erfolgt in Schritt 7 die Ausgabe einer Warnung.

Die Bestimmung der Entfernungswerte E₁ und E₂ wie auch der Maximalzahlabbiegemanöver nmax erfolgt anhand von Erfahrungswerten und insbesondere anhand von der Art und Weise der erfassten verkehrstechnischen Besonderheiten. Handelt es sich hierbei beispielsweise um Staus oder Routensperrungen, so sind höhere Entfernungswerte E₁ und E₂ anzunehmen, beispielsweise eine Entfernung von 150 km für E₁ und 50 km für E₂ oder dgl. als für andere Arten von verkehrstechnischen Besonderheiten wie etwa Geschwindigkeitsmessgeräten. Dort sind die Entfernungswerte deutlich geringer zu wählen, beispielsweise ein Entfernungswert E₁ von 2 km und ein Entfernungswert E₂ von 1 km. Auch die Anzahl der maximal möglichen Abbiegevorgänge ist unterschiedlich zu wählen. Bei Staus oder Sperrungen der Strecke wird diese in der Regel höher gewählt, beispielsweise bei 5, wohingegen für Warnungen vor Geschwindigkeitsmessgeräten hier geringere Werte vorgesehen werden, z.B. ein nₘₐₓ von 2 oder 3.

Zusätzlich und hier nicht gezeigt kann bei Schritt 6 untersucht werden, welcher Art die Abbiegemanöver, die zur Verfolgung der Route von der festgestellten Fahrzeugposition bis zur Position der verkehrstechnischen Besonderheit zu vollziehen sind, sind. Sind darunter Abbiegemanöver einer bestimmten ausgeschlossenen Art, so kann unabhängig von dem Kriterium der ansonsten geringeren Anzahl das Verfahren dennoch zurückspringen in Schritt 1, z.B. sofern Wendemanöver (U-Turns) erforderlich wären.

Auch kann an beliebiger Stelle hinter Schritt 4 überprüft werden, ob ein nur für eine bestimmte Fahrtrichtung vorliegende verkehrstechnische Besonderheit hinsichtlich der Fahrtrichtung, in der diese vorliegt, mit der aktuellen Fahrtrichtung des Fahrzeuges, mit der dieses die Route passiert, übereinstimmt. Ist dies nicht der Fall, so kann ebenfalls aus der Verfahrensabfolge ausgestiegen und zu Schritt 1 zum nochmaligen Einstieg in das Verfahren zurückgekehrt werden.

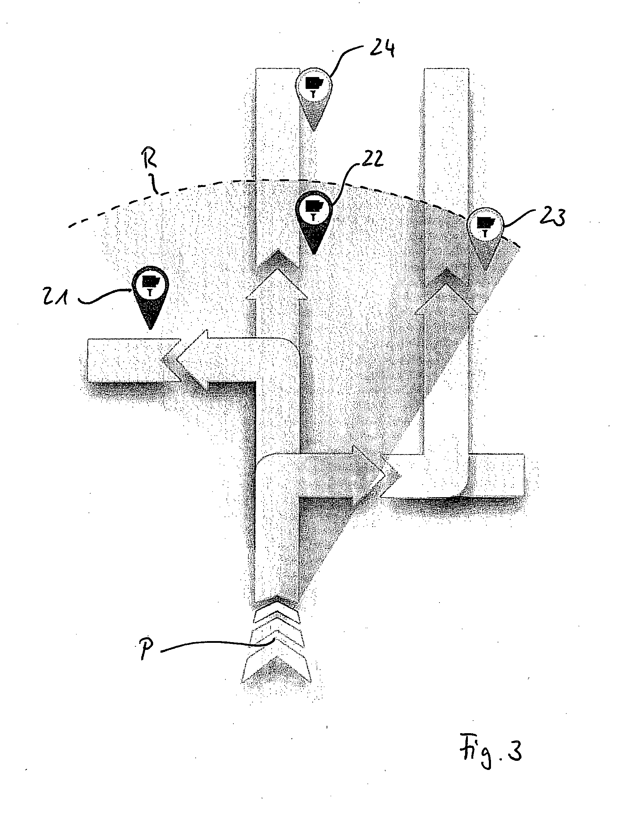

Fig. 3 veranschaulicht dieses Verfahren noch einmal anhand einer anderen graphischen Darstellung. Dort ist mit P angegeben die aktuelle Position des Fahrzeuges bezeichnet. Mit 21, 22, 23 und 24 sind hier beispielhafte Geschwindigkeitsmessgeräte, in diesem Fall Radarfallen, bezeichnet mit jeweiligen Aufstellungsorten entlang von Straßenverläufen, die hier durch unterschiedliche Pfeile angedeutet sind. Um die Position P des Fahrzeuges ist ein Radius R für eine Luftlinienentfernung eingetragen, die maximal die erste vorgegebene Entfernung E₁ erreicht. Wie zu erkennen ist, liegen innerhalb dieses Radius R nur die Radarafallen 21, 22 und 23. Die Radarfalle 24, deren Position das Navigationsgerät ebenfalls erkennt, liegt außerhalb des Radius R und wird deshalb nicht weiter für den Warnvorgang berücksichtigt. Das System hat ferner die verschiedenen Routen berechnet, die zu den Radarfallen 21, 22 bzw. 23 führen. Während die Route zu der Radarfalle 22 allein geradeaus verläuft, also ohne Abbiegemanöver, sind zum Erreichen der Radarfalle 21 ein einmaliges Linksabbiegen, zum Erreichen der Radarfalle 23 ein Rechtsabbiegen und ein nachfolgendes Linksabbiegen erforderlich. Alle drei Radarfallen liegen innerhalb einer vorgegebenen Entfernung E₂ entlang der jeweiligen Route. In diesem vereinfachten Beispiel ist die maximale Anzahl für Abbiegemanöver nₘₐₓ auf 1 gesetzt, so dass die in der Figur dunkler dargestellten Radarfallen 21 und 22 das Kriterium n_{A} ≤ nₘₐₓ erfüllen, nicht jedoch die Radarfalle 23. Vor dieser Radarfalle 23 wird nach dem erfindungsgemäßen Verfahrensablauf und mit dem erfindungsgemäßen System nicht gewarnt, eine Warnung erfolgt lediglich vor den Radarfallen 21 und 22. Verfolgt das Fahrzeug dann seine Route weiter an der Position, an der in Richtung der Radarfalle 21 abzubiegen wäre, geradeaus, so wird, weil zum Erreichen der Radarfalle 21 dann eine Kehrtwendung (U-Turn) und ein Rechtsabbiegen erforderlich wäre, die Radarfalle 21 von der Warnung ausgeschlossen, eine Warnung erfolgt dann lediglich noch vor der Radarfalle 22 und, wenn die Radarfalle 24 in den Radius R gelangt, auch vor dieser.

Anhand dieses Beispiels und der Veranschaulichung ist noch einmal deutlich geworden, wie mit dem erfindungsgemäßen System und dem erfindungsgemäßen Verfahren eine Warnung vor einer Vielzahl von verkehrstechnischen Besonderheiten unterbunden wird, lediglich solche verkehrstechnischen Besonderheiten in die Warnung einbezogen werden, die mit einer bestimmten Wahrscheinlichkeit auf der nicht navigationsgeführten Wegstrecke des Fahrzeuges liegen.

### Bezugszeichenliste

- 1: Schritt
- 2: Schritt
- 3: Schritt
- 4: Schritt
- 5: Schritt
- 6: Schritt
- 7: Schritt
- 10: Navigationsgerät
- 21: Radarfalle
- 22: Radarfall
- 23: Radarfall
- 24: Radarfalle
- E_{LL}: Entfernung Luftlinie
- E_{R}: Routenentfernung
- E₁: erster Entfernungswert
- E₂: zweiter Entfernungswert
- n_{A}: Anzahl Abbiegemanöver
- nₘₐₓ: Maximalanzahl
- P: Position Fahrzeug
- R: Radius Luftlinie
- S₁, S₂, S₃: Satellit

## Patentansprüche

1. System zum Warnen eines Fahrzeugführers vor verkehrstechnischen Besonderheiten mit:
a) einer Positionsbestimmungseinrichtung, welche eingerichtet ist, aus empfangenen Signalen die Bestimmung einer Position durchzuführen, welche die Fahrzeugposition repräsentiert;
b) einer Speichereinrichtung zum Speichern von Straßenverläufen repräsentierenden Kartendaten;
c) einer Routenberechnungseinrichtung zum Berechnen einer Route entlang von durch die Kartendaten repräsentierten Straßenverläufen;
d) einer Empfangseinrichtung zum Empfangen von Informationen bezüglich Art und Position einer verkehrstechnischen Besonderheit;
e) einer Relevanzbestimmungseinrichtung, die eingerichtet ist, eine Relevanz einer von der Empfangseinrichtung empfangenen Information anhand bestimmter Kriterien vorzunehmen;
f) einer Warneinrichtung zur Ausgabe einer Warnung an den Fahrzeugführer; **dadurch gekennzeichnet, dass**
die bestimmten Kriterien die folgenden sind:
i. die Entfernung der Position der verkehrstechnischen Besonderheit von der Fahrzeugposition nach Luftlinie liegt unterhalb eines ersten vorbestimmten Entfernungswertes und
ii. die Entfernung der Position der verkehrstechnischen Besonderheit von der Fahrzeugposition entlang einer möglichen von der Routenberechnungseinrichtung berechneten Route liegt unterhalb eines zweiten vorbestimmten Entfernungswertes und
iii. die Anzahl der entlang der von der Routenberechnungseinrichtung berechneten, möglichen Route zwischen Fahrzeugposition und der Position der verkehrstechnischen Besonderheit erforderlichen Abbiegemanöver liegt unterhalb einer vorbestimmten Maximalanzahl; und
die Warneinrichtung angepasst ist, die Warnung an den Fahrzeugführer auszugeben, wenn in der Relevanzbestimmungseinrichtung die Kriterien i) bis iii) als erfüllt erkannt sind.

2. System nach Anspruch 1 , **dadurch gekennzeichnet, dass** die Relevanzbestimmungseinrichtung zudem eingerichtet ist, die Art der zum Verfolgen der möglichen, von der Routenberechnungseinrichtung berechneten Route zwischen der Fahrzeugposition und der Position der verkehrstechnischen Besonderheit erforderlichen Abbiegemanöver zu bestimmen und dass die Warneinrichtung dazu eingerichtet ist, eine Warnung an den Fahrzeugführer nur dann auszugeben, wenn Abbiegemanöver einer vorbestimmten Art nicht für die Verfolgung der Route erforderlich sind.

3. System nach einem der vorhergehenden Ansprüche, **dadurch gekennzeichnet, dass** die Empfangseinrichtung eingerichtet ist, auch Informationen hinsichtlich einer Fahrtrichtung zu empfangen, für die die verkehrstechnische Besonderheit vorliegt und dass ferner die Relevanzbestimmungseinrichtung auch eingerichtet ist, die Fahrtrichtung entlang der von der Routenberechnungseinrichtung berechneten Route zwischen der Fahrzeugposition und der Position der verkehrstechnischen Besonderheit mit der Fahrtrichtung zu vergleichen, für die die verkehrstechnische Besonderheit vorliegt, und dass die Warneinrichtung eingereichtet ist, nur dann eine Warnung an den Fahrzeugführer auszugeben, wenn die genannten Fahrtrichtungen übereinstimmen.

4. Verfahren zum Warnen eines Fahrzeugführers vor verkehrstechnischen Besonderheiten mit folgenden Schritten:
a) Bestimmen einer Position des Fahrzeuges anhand von empfangenen Signalen;
b) Empfangen von die Position einer verkehrstechnischen Besonderheit repräsentierenden Positionsdaten;
c) Bestimmen einer Luftlinien-Entfernung zwischen der Position des Fahrzeuges und der Position der verkehrstechnischen Besonderheit;
d) Berechnen einer möglichen Route zwischen der Fahrzeugposition und der Position der verkehrstechnischen Besonderheit, wenn die in Schritt c) bestimmte Luftlinien-Entfernung unterhalb eines ersten vorgegebenen Maximalwertes liegt, und Bestimmen einer Routen-Entfernung zwischen der Position des Fahrzeuges und der Position der verkehrstechnischen Besonderheit entlang der berechneten Route;
e) Bestimmung der Anzahl der bei einem Verfolgen der Route zwischen der Position des Fahrzeuges und der Position der verkehrstechnischen Besonderheit erforderlichen Abbiegemanöver, wenn die in Schritt d) bestimmte Routen-Entfernung unterhalb eines zweiten vorgegebenen Maximalwertes liegt;
f) Ausgabe einer Warnung an den Fahrzeugführer, wenn die in Schritt e) bestimmte Anzahl unterhalb eines dritten vorgegebenen Maximalwertes liegt.

5. Verfahren nach Anspruch 4, **dadurch gekennzeichnet, dass** zusätzlich in Schritt e) auch die Arten der jeweils erforderlichen Abbiegemanöver bestimmt werden und dass die Warnung in Schritt f) nur ausgegeben wird, wenn Abbiegemanöver bestimmter vorgegebener Arten nicht unter den erforderlichen Abbiegemanövern sind.

6. Verfahren nach einem der Ansprüche 4 oder 5, **dadurch gekennzeichnet, dass** in Schritt b) zusätzlich die Fahrtrichtung, in der die verkehrstechnische Besonderheit vorliegt, repräsentierende Daten empfangen werden und in Schritt d) und/oder e) bei der Bestimmung der Routenentfernung und/oder der Bestimmung der Anzahl der Abbiegemanöver zusätzlich die Fahrtrichtung berücksichtigt wird, in der die verkehrstechnische Besonderheit vorliegt.

## Claims

1. A system for warning a driver of a vehicle about traffic situations having:
a) a position-determining device, which is designed to carry out the determination of a position from received signals, a position representing the position of the vehicle;
b) a storage device for storing map data representing courses of roads;
c) a route-calculating device for calculating a route along courses of roads represented by the map data;
d) a receiving device for receiving pieces of information in terms of type and position of a traffic situation;
e) a relevance determining device, which is designed to determine the relevance of a piece of information received from the receiving device using certain criteria;
f) a warning device for issuing a warning to the vehicle driver;
**characterised in that**
the determined criteria are as follows:
i. the distance of the position of the traffic situation from the vehicle position as the crow flies is smaller than a first pre-established distance value and
ii. the distance of the position of the traffic situation from the vehicle position along a possible route calculated by the route-calculating device is smaller than a second pre-established distance value and
iii. the number of the necessary turn manoeuvres along the possible route calculated by the route-calculating device, between the vehicle position and the position of the traffic situation; and
the warning device is adapted to issue the warning to the vehicle driver when the criteria i) to iii) are recognised as satisfied in the relevance determining device.

2. The system of claim 1, **characterised in that** the relevance determining device is designed moreover to determine the type of the turn manoeuvres necessary to follow the possible route calculated by the route-calculating device between the vehicle position and the position of the traffic situation and that the warning device is arranged in order to issue a warning to the vehicle driver only when turn manoeuvres of a pre-established type are not required to follow the route.

3. The system according to any of the preceding claims, **characterised in that** the receiving device is designed to receive also pieces of information in terms of driving direction for which the traffic situation is present and that moreover the relevance determining device is also designed to compare the driving direction along the route calculated by the route-calculating device between the vehicle position and the position of the traffic situation with the driving direction for which the traffic situation is present and that the warning device is arranged only to issue a warning to the vehicle driver when the mentioned driving directions coincide.

4. A system for warning a vehicle driver about traffic situations having the following steps:
a) determination of a position of the vehicle using received signals;
b) reception of position data representing the position of a traffic situation;
c) determination of a distance as the crow flies between the position of the vehicle and the position of the traffic situation;
d) calculation of a possible route between the vehicle position and the position of the traffic situation, if the distance as the crow flies determined in step c) is below a first predetermined maximum value, and determination of a distance of a route between the position of the vehicle and the position of the traffic situation along the calculated route;
e) determination of the number of the necessary turn manoeuvres when following the route between the position of the vehicle and the position of the traffic situation, when the distance of the route determined in step d) is below a second predefined maximum value;
f) issuance of a warning to the vehicle driver when the number established in step e) is below a third predetermined maximum value.

5. A method according to claim 4, **characterised in that** additionally also the types of the respective necessary turn manoeuvres are established in step e) and that the warning is only issued in step f) if the turn manoeuvres of certain predetermined types are not part of the necessary turn manoeuvres.

6. The method according to any of the claims 4 or 5, **characterised in that** in step b) data representing moreover the driving direction in which the traffic situation is present, are received and in step d) and/or e) when determining the route distance and/or determining the number of the turn manoeuvres the driving direction is moreover taking into account in which the traffic situation is present.

## Revendications

1. Système d'avertissement d'un conducteur de véhicule sur les situations de circulation comprenant:
a) un dispositif de détermination de position, qui est conçu pour déterminer une position à partir de signaux reçus, position représentant celle du véhicule;
b) un dispositif de stockage permettant de stocker les données cartographiques représentant les trajets routiers;
c) un dispositif de calcul de trajet pemettant de calculer un itinéraire parmi les trajets représentés par les données cartographiques;
d) un dispositif de réception permettant de recevoir des informations sur le type et la position d'une situation de circulation;
e) un dispositif de détermination de pertinence, conçu pour déterminer la pertinence d'une information reçue du dispositif de réception sur la base de certains critères;
f) un dispositif d'avertissement permettant d'émettre un avertissement à l'intention du conducteur du véhicule;
**caractérisé en ce que**
les critères déterminés sont les suivants:
i. la distance de la position de la situation de circulation à partir de la position du véhicule à vol d'oiseau est inférieure à une première valeur de distance préétablie et
ii. la distance de la position de la situation de circulation à partir de la position du véhicule le long d'un itinéraire possible, calculé par le dispositif de calcul de trajet, est inférieure à une deuxième valeur de distance préétablie et
iii. le nombre de manoeuvres de virage nécessaires le long de l'itinéraire possible calculé par le dispositif de calcul de trajet, entre la position du véhicule et la position de la situation de circulation; et
le dispositif d'avertissement est adapté pour émettre l'avertissement à l'intention du conducteur du véhicule lorsque les critères i) à iii) sont reconnus comme satisfaits dans le dispositif de détermination de pertinence.

2. Système conforme à la revendication 1, **caractérisé en ce que** le dispositif de détermination de pertinence est conçu en outre pour déterminer le type des manoeuvres de virage nécessaires pour suivre l'itinéraire possible calculé par le dispositif de calcul de trajet entre la position du véhicule et la position de la situation de circulation et que le dispositif d'avertissement est conçu pour émettre un avertissement à l'intention du conducteur du véhicule seulement lorsque les manoeuvres de virage d'un type préétabli ne sont pas requises pour suivre l'itinéraire.

3. Système selon l'une quelconque des revendications précédentes, **caractérisé en ce que** le dispositif de réception est conçu pour recevoir également des informations sur la direction de conduite concernée par la situation de circulation et **en ce que** de plus le dispositif de détermination de pertinence est également conçu pour comparer la direction de conduite le long de l'itinéraire calculé par le dispositif de calcul de trajet entre la position du véhicule et la position de la situation de circulation avec la direction de conduite concernée par la situation de circulation et **en ce que** le dispositif d'avertissement est conçu uniquement pour émettre un avertissement à l'intention du conducteur du véhicule lorsque les directions de conduite mentionnées coïncident.

4. Système d'avertissement d'un conducteur de véhicule sur les situations de circulation comprenant les phases suivantes:
a) détermination d'une position du véhicule à l'aide de signaux reçus;
b) reception des données de position représentant la position d'une situation de circulation;
c) détermination d'une distance à vol d'oiseau entre la position du véhicule et la position de la situation de circulation;
d) calcul d'un itinéraire possible entre la position du véhicule et la position de la situation de circulation, si la distance à vol d'oiseau déterminée à la phase c) est inférieure à une première valeur maximale prédéterminée, et détermination d'une distance d'un itinéraire entre la position du véhicule et la position de la situation de circulation le long de l'itinéraire calculé;
e) détermination du nombre de manoeuvres de virage nécessaires pour suivre l'itinéraire entre la position du véhicule et la position de la situation de circulation, lorsque la distance de l'itinéraire déterminé à la phase d) est inférieure à une deuxième valeur maximale prédéfinie;
f) émission d'un avertissement à l'intention du conducteur du véhicule lorsque le nombre établi à la phase e) est inférieur à une troisième valeur maximale prédéterminée.

5. Procédé selon la revendication 4, **caractérisé en ce qu'**en outre les types des manoeuvres de virage nécessaires respectives sont établis à la phase e) et que l'avertissement est seulement émis à la phase f) si les manoeuvres de virage de certain types prédéterminés ne font pas partie des manoeuvres de virage nécessaires.

6. Procédé selon l'une quelconque des revendications 4 ou 5, **caractérisé en ce que** les données représentant en outre la direction de conduite concernée par la situation de circulation sont reçues à la phase b) et qu'à la phase d) et/ou e) pour déterminer la distance d'itinéraire et/ou le nombre des manoeuvres de virage, on prend en compte la direction de conduite concernée par la situation de circulation.
